# FASCICULE DE BREVET EUROPEEN

(11) **EP 0 948 294 B1**
(45) Date de publication et mention de la délivrance du brevet: **23.11.2005**
(21) Numéro de dépôt: 97954455.8
(22) Date de dépôt: 22.12.1997
(51) Int. Cl.: A61C 1/18, A61C 1/05

(54) **ATTACHEMENT TOURNANT POLYVALENT**
DREHENDE MEHRZWECK-BEFESTIGUNGSVORRICHTUNG
MULTIPURPOSE ROTATING ATTACHMENT

(30) Priorité: 27.12.1996 FR 9616129
(43) Date de publication de la demande: 13.10.1999
(73) Titulaire: Bien-Air Holding SA, 2504 Bienne (CH)
(72) Inventeur: MOSIMANN, Vincent, CH-2520 La Neuveville (CH)
(74) Mandataire: Laurent, Jean
(86) Numéro de dépôt international: PCT/EP1997/007243
(87) Numéro de publication internationale: WO 1998/029052

(56) Documents cités:
- EP-A- 0 369 043
- EP-A- 0 393 364
- FR-A- 2 733 680

## Description

La présente invention concerne un attachement tournant polyvalent capable de relier différents types d'instruments dentaires à une source d'alimentation.

Plus particulièrement, cette invention concerne un attachement tournant capable de se connecter sur des instruments dentaires dont les parties arrière qui sont destinées à assurer la connexion de cet instrument sur l'attachement, présentent, les unes par rapport aux autres, des configurations géométriques différentes.

Les installations dentaires classiques qui sont utilisées par les praticiens pour les opérations de traitement des dents, sont généralement constituées d'une source d'alimentation qui est désignée, dans ce milieu professionnel, sous le terme "d'unit" et qui est capable de fournir les agents et l'énergie nécessaires à la mise en oeuvre desdites opérations.

Ces installations comportent généralement plusieurs tuyaux d'alimentation, dont une extrémité est connectée à l'unit, tandis que l'autre extrémité est prévue pour venir se raccorder, via une prise de raccordement spécifique, sur l'arrière d'un ou de plusieurs instruments dentaires qui sont disponibles.sur un présentoir.

Pour sa fixation mécanique sur un instrument, chaque prise de raccordement est généralement équipée d'un écrou tournant qui est ménagé pour venir se visser sur l'arrière de cet instrument, ce dernier comportant un filetage prévu à cet effet.

Cet ensemble, constitué du tuyau, de la prise et de l'écrou tournant, est désigné, dans le domaine dentaire, sous le terme "d'attachement".

Grâce à cette prise et à l'écrou, le praticien peut, en fonction des opérations qu'il doit effectuer, raccorder les instruments nécessaires sur les attachements respectifs de son installation en fonction de leur compatibilité.

EP 0 393 364 divulgue un manchon adaptateur pour relier une pièce à main à un conduit d'alimentation.

On cherche, pour des questions de simplification, de rationalisation et d'économie à améliorer cette compatibilité et à permettre le raccordement du plus grand nombre d'instruments, voire de tous les instruments, sur un même attachement et à équiper les installations de plusieurs attachements d'un même type, voire d'un seul et unique attachement capable d'assurer le raccordement de tous les instruments à l'unit.

Or, les instruments qui existent sur le marché et dont les praticiens sont équipés ont des parties arrière de configurations géométriques différentes, c'est-à-dire de forme et/ou de dimensions différentes, ce qui fait obstacle à cette compatibilité.

Ainsi, la présente invention a-t-elle pour but de fournir un attachement tournant répondant à ce problème et qui puisse, par une solution simple et peu coûteuse, permettre un raccordement sur différents types d'instruments dentaires ayant des parties arrière de géométries différentes.

A cet effet, l'invention a pour objet un attachement tournant polyvalent comportant :
- un tuyau comportant des moyens de raccordement, tels qu'au moins un câble d'alimentation électrique et/ou au moins un conduit de transport d'un fluide, ces moyens de raccordement étant destinés à être connectés à la source d'alimentation,
- un connecteur prévu pour assurer la liaison, à l'avant de l'attachement, entre un instrument dentaire et les moyens de raccordement, ce connecteur étant formé d'un premier raccord fixe solidaire des moyens de raccordement et d'un deuxième raccord mobile et amovible, qui peut être relié au premier raccord et qui est prévu pour être connecté à l'instrument dentaire, le deuxième raccord pouvant être monté tournant et maintenu axialement sur le premier raccord par l'intermédiaire d'une bague d'arrêt tournante, bloquée axialement sur le premier raccord et pouvant être vissée sur le deuxième raccord, et
- un écrou pouvant venir se solidariser à la partie arrière de l'instrument et, comportant une face d'appui destinée à venir abouter contre un épaulement correspondant de l'attachement pour assurer la poussée et la mise en place du connecteur sur la partie arrière de l'instrument dentaire, lorsque l'écrou est vissé, cet attachement étant caractérisé en ce que l'écrou est composé, à l'avant, d'un manchon amovible et, à l'arrière, d'une douille qui peut être reliée au manchon par un système vis-écrou, le manchon étant prévu pour venir se fixer sur l'instrument dentaire, tandis que la douille présente une surface d'appui destinée à venir abouter contre la bague.

Mais d'autres caractéristiques et avantages de l'invention apparaîtront à la lecture de la description détaillée qui suit, faite en référence aux dessins annexés qui sont donnés uniquement à titre d'exemple, et dans lesquels :
- la figure 1 est une vue de côté schématique d'un équipement dentaire comportant un instrument relié à un attachement selon l'invention,
- la figure 2 est une vue en coupe longitudinale d'une section d'un attachement raccordé à l'arrière d'un instrument dentaire d'un premier type, dont l'arrière présente une première configuration,
- la figure 3 est une vue en coupe similaire à la figure 2, mais représentant l'attachement de la figure 2 raccordé à l'arrière d'un instrument dentaire d'un second type et dont l'arrière présente une seconde configuration,
- la figure 3A est un agrandissement de la zone A de la figure 3, et
- la figure 4 est une vue en perspective d'une bague d'arrêt et d'un raccord mobile équipant l'attachement de la figure 3.

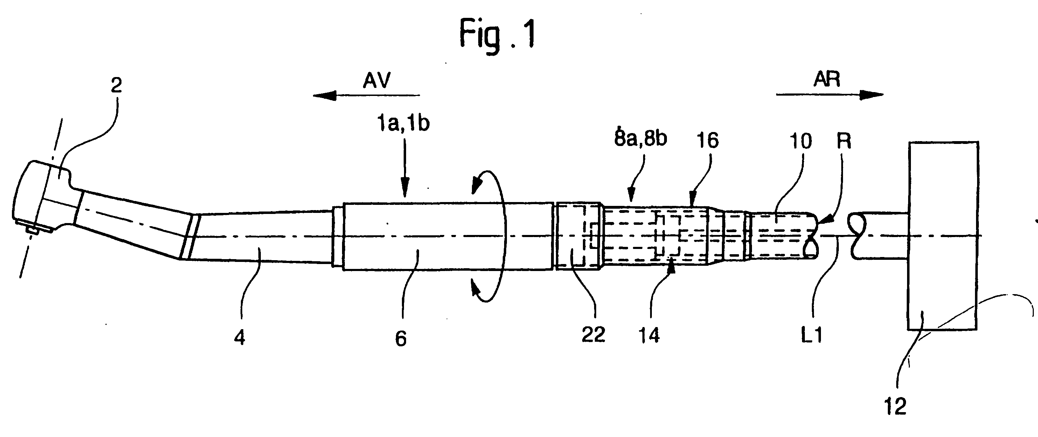

En se référant désormais à la figure 1, on décrira ci-après un équipement dentaire qui comporte un instrument classique 1a, 1b, formé dans cet exemple d'un contre-angle qui est pourvu, à son extrémité avant, d'une tête 2, agencée pour recevoir un outil, non représenté.

Dans la présente demande, "l'avant" sera défini comme étant la région de l'équipement s'étendant en direction de la tête 2 (flèche AV) et "l'arrière" sera défini comme étant la région de cet équipement s'étendant dans la direction opposée (flèche AR), c'est-à-dire en direction d'un unit S auquel l'instrument 1a, 1b est raccordé.

A l'arrière du corps de l'instrument 1a, 1b et plus particulièrement à l'arrière de son manche 4, est connecté un moteur 6 qui peut être désolidarisé du manche 4 par simple traction.

Le moteur 6 est en outre connecté, à l'arrière, à un attachement 8a, 8b qui comprend un tuyau d'alimentation 10 relié à l'unit S qui forme une source d'alimentation en énergie électrique et en fluides.

Cet attachement 8a, 8b comprend, en outre, une prise 14 à l'intérieur de laquelle sont agencés plusieurs éléments de connexion, non référencés, comprenant plusieurs canaux de transport de fluide ainsi que plusieurs contacts et fils d'alimentation électrique.

Le tuyau d'alimentation 10 comporte plusieurs conduits de transport de fluide et plusieurs fils d'alimentation électrique (également non référencés) formant des moyens de raccordement R qui sont connectés à l'unit S et qui sont respectivement raccordés aux canaux et aux fils de la prise 14.

On précisera que ces canaux et conduits de transport de fluide permettent de fournir à l'équipement de l'air qui sert comme air moteur, si l'instrument 1a, 1b est une turbine ou un moteur pneumatique, ou éventuellement comme air de refroidissement, si l'instrument 1a, 1b est un contre-angle connecté à un moteur électrique 6, comme dans l'exemple représenté.

Ces canaux et conduits peuvent permettre également d'assurer l'évacuation de l'air d'échappement vers l'arrière de l'équipement, en direction de l'unit S, et/ou peuvent servir à amener l'air et l'eau nécessaires au "spray" de refroidissement, spray qui est destiné à être projeté sur la zone de travail de l'outil qui est supporté et entraîné par la tête 2.

Les fils et contacts électriques de tous ces composants permettent, quant à eux, d'alimenter le moteur électrique 6 et/ou une lampe d'éclairage, qui peut être par exemple logée dans le moteur 6 et qui peut être associée à des fibres optiques guidant la lumière jusqu'à la tête 2, en direction de la zone de travail.

On précisera en outre que le tuyau 10 et la prise 14 peuvent comporter d'autres fils, canaux et/ou conduits, non représentés, ayant des fonctions qu'il n'est pas nécessaire de décrire ici.

Bien que l'on ait représenté et décrit ici un attachement et un instrument comportant plusieurs moyens de raccordement formés de canaux, conduits et fils de connexion, on comprendra que l'invention s'applique également à un agencement ne comportant qu'un seul conduit et/ou un seul canal de transport de fluide, et/ou un seul fil d'alimentation électrique.

La partie arrière 22 de l'instrument 1a, 1b qui est représentée de façon partielle sur les dessins, est décrite, dans cet exemple particulier, comme appartenant à un élément d'un moteur. Ce moteur fait partie, au sens large, d'une gamme de plusieurs types d'appareils ou composants destinés au traitement dentaire et ayant différentes fonctionnalités, ces appareils y compris le moteur présentement décrit étant ici tous qualifiés "d'instruments dentaires", qu'ils interviennent de façon directe ou indirecte lors du traitement.

L'attachement 8a, 8b, objet de la présente invention et que l'on décrira ci-après de façon plus détaillée, est capable de se connecter de façon avantageuse sur différents types d'instruments dentaires dont les parties arrière ont des configurations géométriques différentes. Ces instruments qui peuvent être un moteur comme décrit dans cet exemple ou notamment une turbine, un raccord de turbine, ou encore un contre-angle avec moteur sont classiques et connus de l'homme du métier et ne seront par conséquent pas décrits ici de façon détaillée.

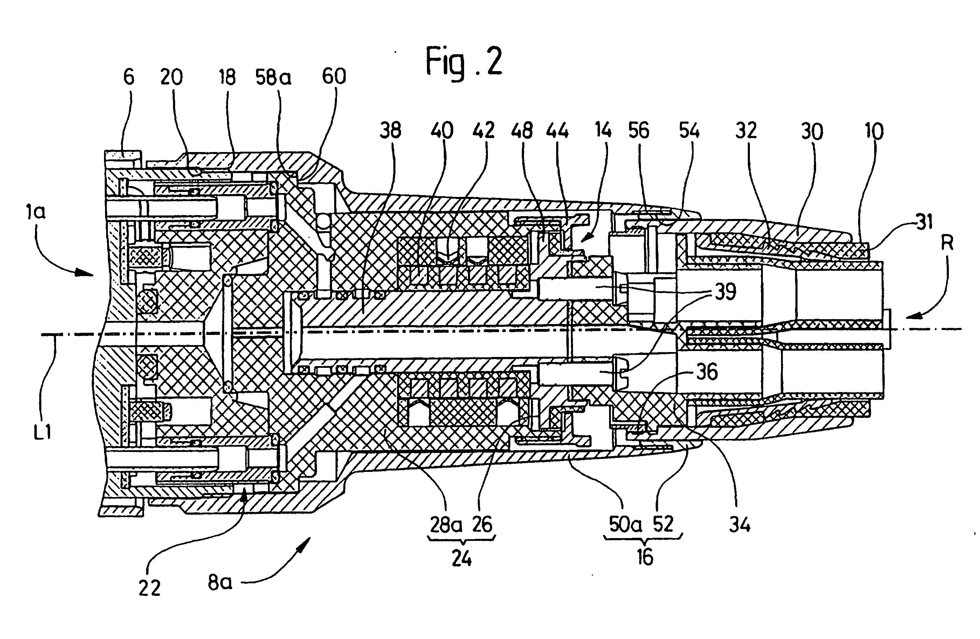

L'attachement 8a, 8b comporte un écrou de fixation tournant 16 dans lequel est ménagé, à son extrémité avant, un filetage intérieur 18 (figure 2) qui est agencé pour venir se visser sur un filetage extérieur 20, prévu sur la partie arrière 22 de l'instrument 1a, 1b. Bien que les agencements des exemples de réalisation des figures 1 à 3 aient été décrits et représentés avec une liaison mécanique, entre l'écrou tournant 16 et l'arrière de l'instrument 1a, 1b, du type vis-écrou (formée par les filetages 18 et 20), on précisera que l'invention n'est pas limitée à ce type de fixation.

On notera ici que l'instrument la qui est représenté à la figure 2 et que l'on va décrire ci-après est un instrument d'un premier type, notamment un moteur électrique, ayant une première configuration arrière spécifique.

Pour assurer la connexion entre l'unit S et l'instrument la formé par le moteur 6, la prise 14 comporte un connecteur 24 qui est formé de deux raccords respectivement fixe 26 et mobile 28a, ces deux raccords étant prévus pour assurer l'interface et la liaison fonctionnelle pour le transport de l'énergie électrique et des fluides entre les moyens de raccordement R du tuyau 10 et l'arrière 22 du moteur.

Dans cet exemple, l'attachement 8a comporte un corps creux ou manchon 30 dans lequel est maintenue fixement une gaine en matière souple 31, par l'intermédiaire d'une bride 32. Le raccord fixe 26 du connecteur 24 est également engagé et maintenu fixement dans le corps 30, via un insert 34, rendu solidaire du corps 30 par une bague vissée 36.

Le raccord fixe 26 comporte un arbre longitudinal évidé 38 qui est fixé à l'insert 34 par des vis classiques 39. Cet arbre 38 porte des contacts électriques radiaux 40 (un seul étant référencé) qui sont fixés sur l'arbre 38 et qui coopèrent avec des contacts électriques correspondants 42, solidaires du raccord mobile 28a.

On précisera que le raccord fixe 26 de par sa fixation sur le tuyau 10, via l'insert 34, les vis 39, et la bague 36 est destiné à rester à demeure sur l'attachement 8a, aux opérations de maintenance près. Comme on le comprendra de la description qui suit, cette partie fixe 26 du connecteur 24 est destinée à rester de façon permanente sur l'attachement 8a.

On remarquera également que le raccord mobile 28a du connecteur 24 ainsi que l'arbre 38 du raccord fixe 26 comportent des canaux de transport de fluides, ainsi que des alésages, gorges et orifices divers, non référencés, qui permettent le transport du ou des fluides depuis les moyens de raccordement R, vers l'instrument 1a. Ces éléments comportent également divers moyens d'étanchéité classiques, tels que des joints toriques qui ne seront pas décrits de façon plus détaillée.

L'arrière 22 de l'instrument la comporte également un ensemble de moyens de connexion formés aussi de canaux de transport de fluide, d'alésages, de gorges et d'orifices divers, mais aussi de contacts et de fils électriques que l'on ne décrira pas non plus, leur construction étant classique et à la portée de l'homme du métier.

Comme on le comprend, le raccord mobile 28a peut tourner sur le raccord fixe 26, avec des contacts et un ajustement frottants qui assurent une bonne connexion entre ces deux raccords.

Le raccord mobile 28a peut cependant, en utilisation, être immobilisé axialement sur l'arbre 38 et par rapport au raccord fixe 26, par l'intermédiaire d'une bague d'arrêt tournante 44 dont l'avant est vissé sur l'arrière du raccord mobile 28a.

A cet effet, l'arbre 38 du raccord fixe 26 comporte un collet 48 qui est, dans cet exemple, associé à un palier (non référencé) à bas coefficient de frottement.

Le collet 48 est emprisonné axialement entre la bague 44 et le raccord mobile 28a.

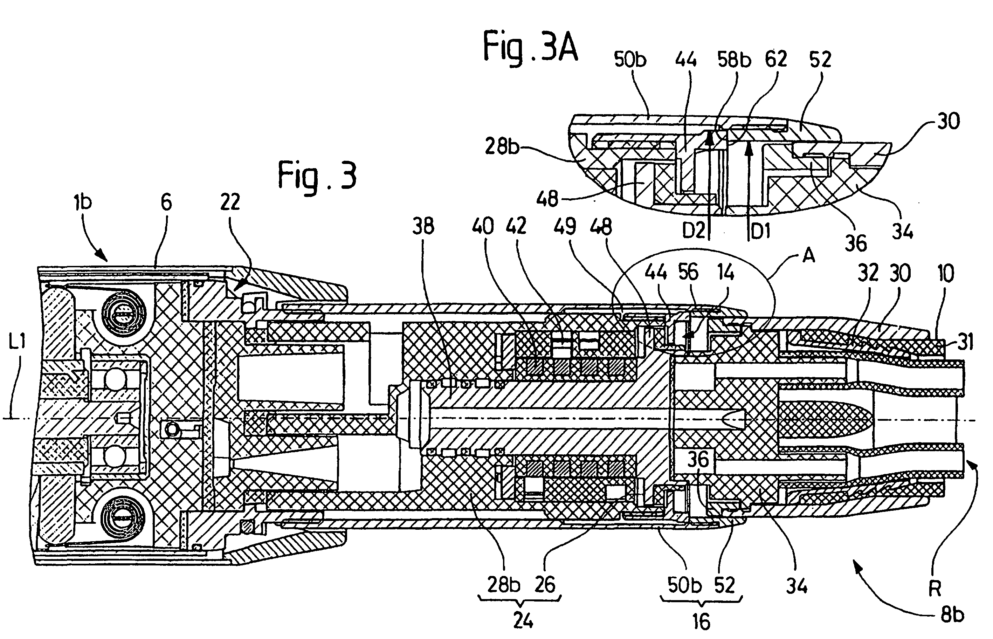

On remarquera sur les figures 2 et 3 que cet agencement présente des jeux fonctionnels tels que la bague d'arrêt 44 peut être vissée et serrée sur le raccord mobile 28a, sans qu'il y ait coincement de l'ensemble bague 44-raccord 28a sur le collet 48, et donc sur le raccord fixe 26. Ainsi, la bague 44, le raccord mobile 28a, l'arrière 22 de l'instrument la et l'écrou 16 peuvent tourner ensemble, autour du raccord fixe 26 et par rapport à l'axe longitudinal L1 de l'attachement 8a et du tuyau 10, pour permettre à l'instrument d'être tournant à ce niveau de l'équipement, afin d'offrir au praticien une plus grande liberté de mouvement dans ses manipulations, lors du traitement.

L'écrou 16 de l'attachement 8a est avantageusement composé, à l'avant, d'un manchon amovible 50a et, à l'arrière, d'une douille 52 qui peut être reliée au manchon 50a par un système vis-écrou, constitué d'un premier filetage 54 ménagé à l'avant de la douille 52 et d'un second filetage 56 qui est destiné à être vissé sur le premier et qui est ménagé à l'arrière du manchon 50a. Le manchon 50a est de l'autre côté prévu pour venir se fixer sur l'arrière de l'instrument dentaire 1a, notamment via les filetages 18 et 20, ce qui permet d'assujettir mécaniquement l'attachement 8a et l'instrument dentaire 1a.

Dans cet accouplement entre ce premier type d'instrument la et ce premier type de manchon 50a, l'appui sous pression entre l'arrière 22 de l'instrument la et le raccord mobile 28a se fait par l'intermédiaire d'une première surface d'appui 58a ménagée, dans cet exemple, dans le fond d'un logement du manchon 50a, au voisinage du filetage 18. Cette surface d'appui 58a a la forme d'un épaulement annulaire qui coopère par pression axiale sur un épaulement 60, ménagé dans cet exemple sur le raccord mobile 28a, et sur lequel vient abouter la surface d'appui 58a du manchon 50 lorsque l'on visse l'écrou 16 sur la partie arrière 22 du moteur 1a. On assure ainsi qu'il y ait contact et communication étanche entre les moyens de connexion de l'attachement 8a et les moyens de connexion de l'instrument 1a.

On se référera désormais à la figure 3 qui représente un attachement 8b selon l'invention, accouplé à un instrument 1b d'un deuxième type, constitué dans cet exemple par un moteur électrique ayant une partie arrière présentant une deuxième configuration spécifique.

Pour des raisons de simplification, on a désigné sur la figure 3, les parties similaires à celles décrites précédemment, avec les mêmes références que celles utilisées ci-dessus.

Comme on le voit sur la figure 3, le manchon amovible 50b de l'écrou 16 est différent du manchon 50a représenté à la figure 2. Plus particulièrement, la longueur de ces manchons amovibles 50a et 50b et la géométrie de leur partie avant sont adaptées au type d'instrument 1a, 1b sur lequel l'attachement 8a, 8b doit se connecter.

En outre, l'attachement 8b de la figure 3 est équipé d'un raccord mobile 28b différent du raccord mobile 28a qui équipe l'attachement 8a, afin d'assurer l'adaptation de cet attachement 8b sur l'arrière de l'instrument 1b.

On notera cependant qu'entre ces deux configurations, la même base de l'attachement a été conservée, puisque le tuyau 10, le raccord fixe 26 avec son arbre 38 et ses contacts électriques 40 et la bague d'arrêt 44 sont les mêmes pour les deux raccordements.

On voit sur les deux figures 2 et 3 des détails constructifs différents notamment du tuyau 10, de l'insert 34 et de l'arbre 38 car, sur les deux figures 2 et 3, on a représenté ces éléments selon des plans de coupe différents.

On comprend que le raccordement de cette même base d'attachement sur des instruments de géométrie différente se fait par le changement des raccords mobiles et amovibles 28a et 28b et par le changement des manchons mobiles et amovibles 50a et 50b, le changement des raccords mobiles et amovibles 28a, 28b se faisant en dévissant et vissant la bague d'arrêt 44.

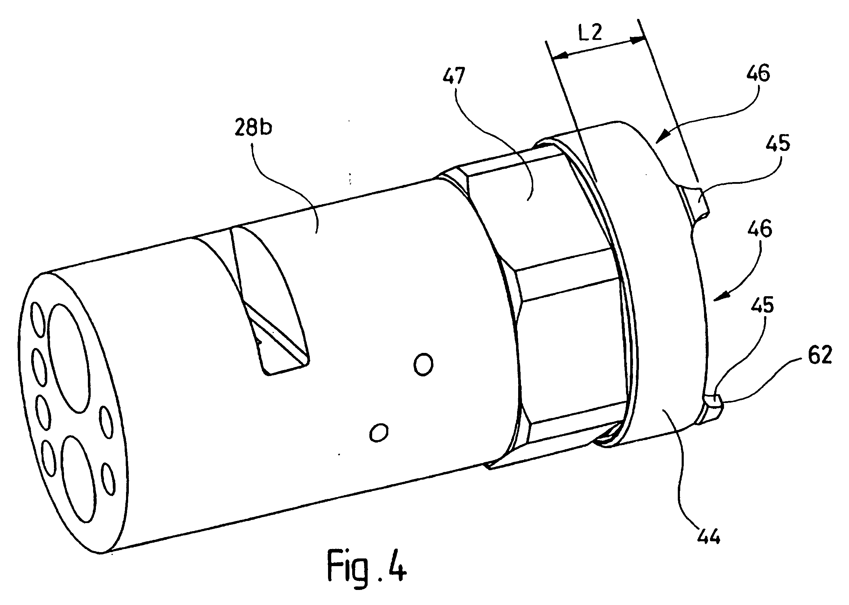

A titre indicatif, la longueur totale L2 de la bague d'arrêt 44 (figure 4) est d'environ 5 mm. Cette bague 44 comporte à sa périphérie, en particulier à l'arrière, des doigts 45 (ici quatre à 90°) qui font saillie de l'arrière de la bague 44, en direction longitudinale, et qui s'étendent également en direction radiale. Ces doigts 45 constituent entre autres des moyens de préhension de la bague 44 qui permettent de la manipuler en rotation.

Ainsi, la bague d'arrêt 44 a une longueur et une forme telles qu'elle peut être prise facilement à la main. Dans cet exemple, la bague 44 est donc prévue pour pouvoir être actionnée manuellement afin de permettre notamment à un technicien de la visser et de la dévisser pour changer le raccord mobile et amovible 28a par un autre type de raccord 28b. Bien entendu, on pourrait donner à la bague 44 une autre forme pour lui permettre d'être actionnée par exemple par un outil .

On précisera en outre que la gamme des raccords mobiles et la gamme des manchons n'est pas limitée à celle décrite, mais peut être étendue à d'autre types de raccords et de manchons, en fonction de la géométrie des instruments que l'on cherche à raccorder à l'attachement.

Dans les deux exemples décrits, on notera que le manchon 50a, 50b présente une longueur nettement supérieure à celle de la douille 52, ce manchon 50a, 50b enveloppant le raccord amovible 28a, 28b du connecteur 24, ainsi que la bague d'arrêt 44 et se prolongeant derrière cette bague 44 pour venir s'accrocher sur la douille 52. A titre indicatif, la douille 52 a une longueur totale d'environ 4,2 mm, tandis que les manchons 50a et 50b ont des longueurs totales respectives d'environ 35 et 32,2 mm.

Ainsi, lorsque le technicien désolidarise le manchon amovible 50a, 50b de l'attachement en le dévissant, il a directement accès à la bague 44 sans avoir besoin de repousser la douille 52 vers l'arrière. En effet, la douille 52 s'étend essentiellement derrière la bague d'arrêt 44, vers l'arrière de l'équipement, en direction du tuyau 10, et ne recouvre que le corps creux 30. De ce fait, en l'absence du manchon amovible 50a, 50b, le praticien peut, s'il le souhaite, saisir à la fois la bague 44 et la douille 52 qui peuvent tourner ensemble. On précisera en outre ici que la bague 44 et la douille 52 restent toutes deux à demeure sur l'attachement et qu'elles ne peuvent pas s'en désolidariser, du moins sans déconnecter le tuyau 10 et ses moyens de raccordement R de l'unit S.

On constate ainsi que dans cet agencement, toutes les parties mobiles de l'attachement sont amovibles et peuvent être interchangées, à l'exception de la bague d'arrêt 44 et de la douille 52 qui restent à demeure sur l'attachement.

En effet, comme on le voit sur les figures 3 et 3A, le diamètre intérieur D1 de la douille 52 est, en particulier à l'avant de cette douille 52, inférieur au diamètre extérieur arrière D2 de la bague d'arrêt 44, si bien que la bague d'arrêt 44 peut agir comme butée vis-à-vis de la douille 52 et elle peut bloquer le déplacement axial de cette douille 52 vers l'avant. La douille 52 ne peut donc pas être perdue, si le tuyau 10 n'est pas déconnecté de l'unit S.

En outre, le manchon 50b et le raccord mobile 28b ne comportant pas dans cet agencement de surfaces d'appui axiales, la douille 52 remplit cette fonction de maintien axial, à la place du manchon 50a (figure 2), puisqu'elle comporte à l'avant une surface d'appui frontale 58b qui aboute, à l'arrière de la bague 44, contre une surface d'appui 62 formée par l'extrémité libre des doigts 45.

Ainsi, lorsque l'on visse le manchon 50b sur l'arrière 22 de l'instrument 1b par l'intermédiaire des filetages 18 et 20, l'écrou 16 tire l'arrière de l'instrument 1b. La douille 52 en prenant appui contre la bague 44 permet de bloquer le raccord mobile 28b contre l'arrière de l'instrument 1b, afin d'assurer la connexion entre l'attachement et l'instrument 1b.

On notera en outre que la surface d'appui frontale 58b de la douille 52 constitue son bord le plus avant, si bien que la douille 52 ne s'étend pas au-delà de la surface arrière d'appui 62 de la bague 44, et ne peut venir chevaucher cette bague. On constate aussi que la liaison vis-écrou entre la douille 52 et le manchon 50a, 50b, liaison constituée par les filetages 54 et 56, est formée dans cet agencement derrière la bague 44 et en particulier derrière sa surface d'appui 62.

En se référant à la figure 4, on voit que les doigts 45 de la bague 44 délimitent entre eux des échancrures semi-oblongues 46 débouchant radialement et permettant de ménager entre l'arrière de la bague 44 et l'avant de la douille 52 des voies de communication permettant au fluide d'échappement de circuler depuis l'arrière de l'instrument 1b, vers le tuyau 10. En effet, l'insert 34 est, comme on le voit à la figure 2, échancré sur le côté tandis que la périphérie du raccord mobile 28b (figure 4) comporte des cavités 47 permettant à ce fluide de circuler entre le manchon 50b et ce raccord 28b. En outre, et comme on le voit à la figure 3, l'arrière du manchon 50b comporte, avant le filetage 56, une chambre annulaire intérieure 49 qui permet également au fluide d'échappement de circuler entre la bague 44 et le manchon 50b.

On comprend de ce qui vient d'être décrit que l'on a fourni un attachement simple et qui est adaptable à de nombreuses configurations arrière de différents instruments dentaires présentant des géométries différentes, et cela par l'interchangeabilité de plusieurs et en particulier de deux pièces amovibles, facilement démontables.

## Revendications

1. Attachement tournant polyvalent destiné à connecter, à une source d'alimentation (S), des instruments dentaires (1a, 1b) ayant des parties arrière (22) de configurations géométriques différentes, cet attachement comportant :
- un tuyau (10) comportant des moyens de raccordement (R), tels qu'au moins un câble d'alimentation électrique et/ou au moins un conduit de transport d'un fluide, ces moyens de raccordement (R) étant destinés à être connectés à ladite source d'alimentation (S),
- un connecteur (24) prévu pour assurer la liaison, à l'avant de l'attachement, entre un instrument dentaire (1a, 1b) et lesdits moyens de raccordement (R), ce connecteur (24) étant formé d'un premier raccord fixe (26) solidaire des moyens de raccordement (R) et d'un deuxième raccord mobile et amovible (28a, 28b), qui peut être relié au premier raccord (26) et qui est prévu pour être connecté à l'instrument dentaire (1a, 1b), le deuxième raccord (28a, 28b) pouvant être monté tournant et maintenu axialement sur le premier raccord (26) par l'intermédiaire d'une bague d'arrêt tournante (44), bloquée axialement sur le premier raccord (26) et pouvant être vissée sur le deuxième raccord (28a, 28b), et
- un écrou (16) pouvant venir se solidariser à la partie arrière (22) de l'instrument (1a, 1b) et comportant une face d'appui (58a, 58b) destinée à venir abouter contre un épaulement correspondant (60, 62) dudit attachement pour assurer la poussée et la mise en place du connecteur (24) sur la partie arrière (22) de l'instrument dentaire (1a, 1b), lorsque l'écrou (16) est vissé,
l'attachement étant **caractérisé en ce que** ledit écrou (16) est composé, à l'avant, d'un manchon amovible (50a, 50b) et, à l'arrière, d'une douille (52) qui peut être reliée au manchon (50a, 50b) par un système vis-écrou, le manchon (50a, 50b) étant prévu pour venir se fixer sur l'instrument dentaire (1a, 1b), tandis que la douille (52) présente une surface d'appui (58b) destinée à venir abouter contre la bague (44).

2. Attachement selon la revendication 1, **caractérisé en ce que** le manchon (50a, 50b) présente une longueur nettement supérieure à celle de la douille (52).

3. Attachement selon la revendication 1, **caractérisé en ce que** le manchon (50a, 50b) enveloppe le raccord mobile (28a, 28b) du connecteur, ainsi que la bague d'arrêt (44).

4. Attachement selon la revendication 1, **caractérisé en ce que** la douille (52) s'étend essentiellement derrière ladite bague (44), en direction du tuyau (10).

5. Attachement selon la revendication 1, **caractérisé en ce que** le système vis-écrou reliant la douille (52) au manchon (50a, 50b) s'étend essentiellement derrière la bague (44).

6. Attachement selon la revendication 1, **caractérisé en ce que** ladite bague (44) est prévue pour pouvoir être actionnée par une opération manuelle, afin de permettre à un technicien de la visser et de la dévisser pour changer le raccord amovible par un autre type de raccord amovible.

7. Attachement selon la revendication 1, **caractérisé en ce que** ladite bague (44) et la douille (52) sont agencées sur l'attachement pour rester à demeure sur celui-ci.

8. Attachement selon la revendication 1, **caractérisé en ce que** ladite bague (44) présente des échancrures (46) permettant le passage d'un fluide d'échappement entre cette bague (44) et la douille (52).

## Patentansprüche

1. Mehrzweck-Drehbefestigung, die dazu vorgesehen ist, zahnärztliche Instrumente (1a, 1b), die hintere Teile (22) mit unterschiedlichen geometrischen Konfigurationen besitzen, mit einer Versorgungsquelle (S) zu verbinden, wobei diese Befestigung umfasst:
- ein Rohr (10), das Verbindungsmittel (R) wie etwa wenigstens ein Kabel für die elektrische Versorgung und/oder wenigstens eine Fluidtransportleitung umfasst, wobei diese Verbindungsmittel (R) dazu bestimmt sind, mit der Versorgungsquelle (S) verbunden zu werden,
- einen Verbinder (24), der dazu vorgesehen ist, vor der Befestigung die Verbindung zwischen einem zahnärztlichen Instrument (1a, 1b) und den Verbindungsmitteln (R) zu gewährleisten, wobei dieser Verbinder (24) aus einem ersten festen Verbindungsstück (26), das mit den Verbindungsmitteln (R) fest verbunden ist, und aus einem zweiten beweglichen und abnehmbaren Verbindungsstück (28a, 28b), das mit dem ersten Verbindungsstück (26) verbunden werden kann und dazu vorgesehen ist, mit dem zahnärztlichen Instrument (1a, 1b) verbunden zu werden, gebildet ist, wobei das zweite Verbindungsstück (28a, 28b) am ersten Verbindungsstück (26) über einen drehbaren Anschlagring (44), der am ersten Verbindungsstück (26) axial blockiert ist und auf das zweite Verbindungsstück (28a, 28b) geschraubt werden kann, drehbar und axial fest angebracht werden kann, und
- eine Mutter (16), die an dem hinteren Teil (22) des Instruments (1a, 1b) befestigt werden kann und eine Abstützfläche (58a, 58b) aufweist, die dazu bestimmt ist, an einer entsprechenden Schulter (60, 62) der Befestigung anzuliegen, um das Schieben des Verbinders (24) auf den und das Anordnen des Verbinders (24) auf dem hinteren Teil (22) des zahnärztlichen Instruments (1a, 1b) zu gewährleisten, wenn die Mutter (16) aufgeschraubt wird,
wobei die Befestigung **dadurch gekennzeichnet ist, dass** die Mutter (16) vorn aus einer abnehmbaren Muffe (50a, 50b) und hinten aus einer Hülse (52), die mit der Muffe (50a, 50b) über ein Schrauben-Mutter-System verbunden werden kann, gebildet ist, wobei die Muffe (50a, 50b) dazu vorgesehen ist, am zahnärztlichen Instrument (1a, 1b) befestigt zu werden, während die Hülse (52) eine Abstützoberfläche (58b) aufweist, die dazu bestimmt ist, an dem Ring (44) anzuliegen.

2. Befestigung nach Anspruch 1, **dadurch gekennzeichnet, dass** die Muffe (50a, 50b) eine Länge aufweist, die deutlich größer als jene der Hülse (52) ist.

3. Befestigung nach Anspruch 1, **dadurch gekennzeichnet, dass** die Muffe (50a, 50b) das bewegliche Verbindungsstück (28a, 28b) des Verbinders sowie den Anschlagring (44) umgibt.

4. Befestigung nach Anspruch 1, **dadurch gekennzeichnet, dass** sich die Hülse (52) in Richtung des Rohrs im Wesentlichen hinter den Ring (44) erstreckt.

5. Befestigung nach Anspruch 1, **dadurch gekennzeichnet, dass** sich das die Hülse (52) mit der Muffe (50a, 50b) verbindende Schrauben-Mutter-System im Wesentlichen hinter den Ring (44) erstreckt.

6. Befestigung nach Anspruch 1, **dadurch gekennzeichnet, dass** der Ring (44) dazu vorgesehen ist, durch eine Handbetätigung betätigt zu werden, um einem Techniker zu ermöglichen, ihn aufzuschrauben und abzuschrauben, um das abnehmbare Verbindungsstück durch einen anderen Typ eines abnehmbaren Verbindungsstücks auszutauschen.

7. Befestigung nach Anspruch 1, **dadurch gekennzeichnet, dass** der Ring (44) und die Hülse (52) an der Befestigung angeordnet sind, um an dieser dauerhaft zu verbleiben.

8. Befestigung nach Anspruch 1, **dadurch gekennzeichnet, dass** der Ring (44) Einschnitte (46) aufweist, die den Durchgang eines ausströmenden Fluids zwischen diesem Ring (44) und der Hülse (52) ermöglichen.

## Claims

1. Multi-purpose revolving connecting assembly intended to connect dental instruments (1a, 1b) having rear portions (22) of different geometric configurations to a supply source (S), said connecting assembly including:
- a hose (10) including coupling means (R), such as at least one electric power cable and/or at least one fluid conveying conduit, these coupling means (R) being intended to be connected to said supply source (S),
- a connector (24) provided for assuring the coupling, at the front of the connecting assembly, between a dental instrument (1a, 1b) and said coupling means (R), this connector (24) being formed of a first fixed coupling piece (26) attached to the coupling means (R) and a second mobile and removable coupling piece (28a, 28b), which can be connected to the first coupling piece (26) and which is provided to be connected to the dental instrument (1a, 1b), the second coupling piece (28a, 28b) being able to be rotatably mounted and held axially on the first coupling piece (26) via a rotating stopping ring (44), said stopping ring being blocked axially on the first coupling piece (26) and able to be screwed onto the second coupling piece (28a, 28b), and
- a nut (16) able to be fixed to the rear portion (22) of the instrument (1a, 1b) and including a support face (58a, 58b) intended to abut against a corresponding shoulder (60, 62) of said connecting assembly in order to push and install the connector (24) onto the rear portion (22) of the dental instrument (1a, 1b), when the nut (16) is screwed in,
the connecting assembly being **characterized in that** said nut (16) is formed, at the front, of a removable sleeve (50a, 50b) and, at the rear, of a bush (52) which can be connected to the sleeve (50a, 50b) by a screw-nut system, the sleeve (50a, 50b) being provided to be fixed to the dental instrument (1a, 1b), while the bush (52) has a support surface (58b) intended to abut against the ring (44).

2. Connecting assembly according to claim 1, **characterized in that** the sleeve (50a, 50b) has a considerably longer length than that of the bush (52).

3. Connecting assembly according to claim 1, **characterized in that** the sleeve (50a, 50b) covers both the mobile coupling piece (28a, 28b) of the connector, and the stopping ring (44).

4. Connecting assembly according to claim 1, **characterized in that** the sleeve (52) extends essentially behind said ring (44), in the direction of the hose (10).

5. Connecting assembly according to claim 1, **characterized in that** the screw-nut system connecting the bush (52) to the sleeve (50a, 50b) extends essentially behind the ring (44).

6. Connecting assembly according to claim 1, **characterized in that** said ring (44) is provided to be able to actuated by a manual operation, in order to allow a technician to screw it in and unscrew it to change the removable coupling piece for another type of removable coupling piece.

7. Connecting assembly according to claim 1, **characterized in that** said ring (44) and said bush (52) are arranged on the connecting assembly to remain fixed thereon.

8. Connecting assembly according to claim 1, **characterized in that** said ring (44) has scallopings (46) allowing the passage of an outlet fluid between said ring (44) and the bush (52).
